# EUROPEAN PATENT APPLICATION

(11) **EP 2 025 700 A1**
(43) Date of publication of application: **18.02.2009**
(21) Application number: 07253017.3
(22) Date of filing: 01.08.2007
(51) Int. Cl.: C08J 3/20, C08L 25/04, C08K 5/02, C08K 5/14, C08J 9/16, C08J 9/12

(54) **process for the production of expandable polystyrene (eps) comprising flame retardant additives**

(71) Applicant: INEOS EUROPE LIMITED, Lyndhurst Hampshire SO43 7FG (GB)
(72) Inventor: The designation of the inventor has not yet been filed
(74) Representative: King, Alex

(57) **Abstract**

The present invention relates to a process for the production of an expandable polystyrene, in particular an expandable polystyrene which comprises at least a primary flame retardant additive and a secondary flame retardant additive, said process comprising:
(1) mixing a formed polystyrene (a) with a first masterbatch of one or more additives other than flame retardant additives and (b) with a blowing agent, at a temperature of at least 175°C to form a blended melt,
(2) mixing said blended melt with the primary flame retardant additive at temperature of less than 175°C,
(3) subsequently mixing said melt with the secondary flame retardant additive at a temperature of less than 150°C, and
(4) granulating the final blended polystyrene.

## Description

The present invention relates to a process for the production of an expandable polystyrene (EPS).

Expandable polystyrene is polystyrene, typically in the form of pellets or beads, containing a quantity of dissolved liquid which serves, during later processing, as a blowing agent. Typical liquids are pentane and butane.

Numerous additives are known for addition to the polystyrene. Typical additives include flame retardants, nucleating agents, plasticizers and agents which facilitate the demoulding of the moulded and expanded articles.

EPS may be manufactured by suspension polymerization. In such a process styrene is polymerized in an aqueous phase with the addition of the blowing agent. The process produces a bead-shaped granulate with a wide range of bead sizes. A disadvantage of this method is that large quantities of water, which must be cleaned, accumulate and that the granulate is usable for the production of the subsequent blown material only within a limited range of sizes, so that a considerable part of the produced polymer must be discarded (or recycled).

An alternative method for the manufacture of EPS is an extrusion process, wherein, after polymerization to form polystyrene, the blowing agent and any other additives are impregnated into the polystyrene in the form of a melt at elevated temperature and pressure using one or more extruders and mixers. The product in this case is usually a cylindrical granulate.

An example of such a process is described in US 6,783,710 B1.

One of the problems with the extrusion process is that the elevated temperatures required can be detrimental to certain additives, particularly flame retardant additives. Certain additives, especially flame retardant additives, may also be incompatible with each other at the elevated temperatures. We have now found a process in which two or more flame retardant additives can be efficiently and stably mixed with a polystyrene to form a flame retardant EPS.

Hence, in a first aspect, the present invention provides a process for the production of an expandable polystyrene, which expandable polystyrene comprises at least a primary flame retardant additive and a secondary flame retardant additive, said process comprising:
(1) mixing a formed polystyrene (a) with a first masterbatch of one or more additives other than flame retardant additives and (b) with a blowing agent, at a temperature of at least 175°C to form a blended melt,
(2) mixing said blended melt with the primary flame retardant additive at temperature of less than 175°C,
(3) subsequently mixing said melt with the secondary flame retardant additive at a temperature of less than 150°C, and
(4) granulating the final blended polystyrene.

The flame retardant additives used may be highly heat sensitive and non-compatible at the high temperatures normally found during processing to form an expandable polystyrene. The process of the present invention allows production of a flame retardant expandable polystyrene comprising said primary and secondary flame retardant additives whilst minimising premature decomposition of the flame retardant additives.

Step (1) of the process of the present invention comprises mixing a polystyrene with a first masterbatch of one or more additives other than flame retardant additives and with a blowing agent at a temperature of at least 175°C to form a blended melt.

The first masterbatch will typically containing all the required additives other than the flame retardants and the blowing agent.

Preferably, step (1) comprises mixing the formed polystyrene with a first masterbatch of one or more additives other than flame retardant additives (hereinafter referred to as step (1a)), and subsequently mixing with a blowing agent (hereinafter referred to as step (1b)), both steps being performed at a temperature of at least 175°C.

In this embodiment, step (1a) produces a melt at a temperature of at least 175°C. As an example of this embodiment, the masterbatch may be pre-mixed with the polystyrene in solid form (usually pellets) and subsequently passed through an extruder to form the melt. Alternatively, the polystyrene may be first melted, and then subsequently mixed with the masterbatch, for example in an extruder or in-line mixer. In step (1b), this melt is mixed with a blowing agent.

The formed polystyrene to be used in step (1) may be a homopolymer or a copolymer of styrene, containing at least 50%, preferably at least 80% and in particular at least 90% by weight of styrene. The comonomer or comonomers present in the styrene copolymer may be selected from vinylaromatic compounds, in particular from alphamethylstyrene, a styrene halogenated on the aromatic ring or a styrene alkylated on the aromatic ring, (meth)acrylic acid, C₁ to C₄ alkyl esters of (meth)acrylic acid such a methyl acrylate, methyl methacrylate, ethyl acrylate, ethyl methacrylate, isopropyl acrylate or butyl acrylate, amides and nitriles of (meth)acrylic acid such as acrylamide, methacrylamide, acrylonitrile or methacrylonitrile, butadiene, ethylene, divinylbenzene and maleic anhydride. Preference is given to using a homopolystyrene or a copolymer of styrene with acrylonitrile or methyl methacrylate. The weight-average molecular mass, Mw, of the styrene polymer may be in a range extending from 150 000 to 450 000 daltons, preferably from 160 000 to 400 000 daltons, in particular from 170 000 to 300 000 daltons. The distribution of the molecular masses of the styrene polymer, calculated by the ratio between Mw and the number-average molecular mass, Mn, of the polymer, may range from 1.5 to 4.0, preferably from 1.7 to 3.5, in particular from 1.8 to 3.0.

In a particular embodiment of the present invention, carbon black is added to the polystyrene as a component of the first masterbatch. Carbon black addition to polystyrene is well known, for example as a filler or pigment, a nucleating agent or a thermal insulator. Examples of the use of carbon black in expandable polystyrene include, for example, US 4,795,763, US 5,149,722, EP 0 620 246, WO 90/06339, WO 94/13721, WO 97/45477, WO 2004/087798 and WO 2006/061571.

In a most preferred embodiment, the present invention seeks to provide an expandable polystyrene composition capable of producing a polystyrene foam having maximum thermal insulation for a given charge of carbon black, as described in WO 2006/061571. Typically, it is desired to introduce from 0.05 to 1.0 part by weight of a carbon black (relative to the polystyrene) having a BET specific surface area, measured according to the method ASTM D 6556, ranging from 550 to 1600 m²/g. More preferably, a carbon black having a very high BET specific surface area, ranging from 550 to 1600 m²/g, preferably from 600 to 1500 m²/g, and in a very low proportion, ranging from 0.05 to less than 1.0 part, preferably from 0.05 to 0.98 part, in particular from 0.05 to 0.95 part, especially from 0.1 to 0.9 part by weight per 100 parts by weight of the styrene polymer is used.

The carbon black may be selected from electrically conductive carbon blacks, and more specifically from carbon blacks having in particular a very high pore volume, as measured by dibutyl phthalate absorption (DBPA) according to method ASTM D 2414, having for example a value of more than 300 ml/100 g, in particular ranging from 310 to 600 ml/100 g, preferably from 310 to 550 ml/100 g, or else having a very high iodine adsorption number, measured according to method ASTM D 1510, having for example a value of more than 500 g/kg, preferably more than 600 g/kg, or ranging from 700 to 1300 g/kg, in particular from 740 to 1150 g/kg. The carbon black may be in the form of solid aggregates with in particular a relatively low size, measured according to method ASTM D 3849, having for example a value ranging from 10 to 100 nm, preferably from 10 to 50 nm, in particular from 10 to 30 nm. By way of example it is possible to use a carbon black from among the electrically conductive carbon blacks sold under the trade names Ketjenblack EC300J^{®} and Ketjenblack EC600JD^{®} by Akzo Nobel (Netherlands).

Other additives that may be added as components of the first masterbatch, either instead of or in addition to carbon black as required, include:
(1) a colour improver/provider, such as graphite or aluminium,
(2) at least one nucleating agent, selected in particular from synthetic waxes, in particular Fischer-Tropsch waxes and polyolefin waxes such as polyethylene waxes or polypropylene waxes, and typically in an amount which can range from 0.05 to 1 part, preferably from 0.1 to 0.5 part, by weight per 100 parts by weight of the styrene polymer (initial polystyrene),
(3) at least one plasticizer, selected in particular from mineral oils and petroleum waxes such as paraffin waxes, in an amount which can range from 0.1 to 1 part, preferably from 0.1 to 0.8 part, by weight per 100 parts by weight of the styrene polymer.
(4) at least one agent which facilitates the demoulding of the moulded and expanded articles, selected in particular from inorganic salts and esters of stearic acid, such as glycerol mono-, di- or tristearates and zinc stearate, calcium stearate or magnesium stearate, in an amount which can range from 0.05 to 1 part, preferably from 0.1 to 0.6 part, by weight per 100 parts by weight of the styrene polymer.

The blowing agent in step (1)/step (1b) may be selected from aliphatic or cyclic, optionally fluorinated, hydrocarbons, carbon dioxide, water and mixtures of two or more of these compounds. More particularly it may be selected from Freons, linear or branched saturated hydrocarbons and cyclic saturated hydrocarbons, preferably C₃ to C₇ hydrocarbons, in particular C₄ to C₆ hydrocarbons, such as n-butane, isobutane, n-pentane, isopentane, n-hexane or isohexane, carbon dioxide, water and mixtures of two or more of these compounds, especially mixtures of two or more of these hydrocarbons, mixtures of carbon dioxide with water, mixtures of carbon dioxide with at least one of these hydrocarbons, or mixtures of water with at least one of these hydrocarbons and, optionally, carbon dioxide.

Pentane is preferred either as iso-pentane, n-pentane or a mixture comprising iso-pentane and n-pentane.

Typically, from 2 to 20 parts, preferably from 3 to 15 parts and in particular from 3 to 10 parts by weight of at least one blowing agent is provided (relative to the initial polystyrene).

The blowing agent may be introduced by any suitable means. A particularly preferred means is by use of a high pressure reciprocating pump and one or more in-line mixers to inject the blowing agent at high pressure and ensure dispersion.

Step (1) is usually at a temperature of at least 180°C, such as a temperature in the range 200 to 260°C.

Step (1) is usually performed at an elevated pressure of at least 4 MPa, for example in the range 4 to 8 MPa. The pressure is selected to minimise vapour where the blowing agent comprises a liquid hydrocarbon (at the conditions used).

Where step (1) comprises the sequential steps (1a) and (1b) as previously described, both steps (1a) and (1b) (and hence the melt produced from step (1a)) are usually at a temperature of at least 180°C, such as a temperature in the range 200 to 260°C.

Where step (1) comprises the sequential steps (1a) and (1b) as previously described, step (1a) is usually performed at an elevated pressure of at least 4 MPa, for example in the range 4 to 8 MPa. It is not necessary to have as high a pressure in step (1b) as in step (1a), and hence step (1b) may be performed at an elevated pressure of at least 2 MPa. However, preferably step (1b) is also performed at a pressure in the range 4 to 8 MPa. In particular, it is advantageous to minimise pressure drop between steps (1a) and (1b) for subsequent processing.

In step (2) of the present invention, the blended melt is subsequently mixed with a primary flame retardant additive at temperature of less than 175°C.

Thus, prior to step (2), the blended melt should be cooled to below 175°C, typically to approximately 170°C. This may be done, for example, by using a suitable heat exchanger/mixer, such as described in DE 28 39 564.

The primary flame retardant additive is preferably selected from one or more halogenated hydrocarbons, more preferably brominated hydrocarbons, and in particular C₆ to C₁₂ halogenated hydrocarbons, such as hexabromocyclohexane, penta-bromomonochlorocyclohexane or hexabromocyclododecane. The primary flame retardant additive is preferably used in an amount which can range from 0.05 to 2 parts, preferably from 0.1 to 1.5 parts, by weight, per 100 parts by weight of the styrene polymer (initial polystyrene). A particularly preferred primary flame retardant comprises hexabromocyclododecane (HBCD).

Such additives are preferably provided as a second masterbatch in a polystyrene which has a melting point below the temperature of this step, which is also below the decomposition temperature of the primary flame retardant. Such polystyrenes are very low molecular weight polystyrenes (less than or equal to 150 000 daltons) and having a low viscosity pattern, for example having a melt flow index (MFI) value greater than or equal to 22 (without any internal lubricants, for example zinc stearate).

Mixing of the primary flame retardant/second masterbatch with the blended melt is preferably achieved by a further in-line mixer.

Step (2) usually performed at an elevated pressure of at least 4 MPa, for example in the range 4 to 8 MPa. The pressure is preferably approximately the same as in step (1). Where necessary, a booster pump may be used to recover any pressure difference between the pressure prior to step (2) and the desired pressure in step (2), for example due to pressure drops in the earlier steps.

In step (3) of the present invention, the blended melt is subsequently mixed with a secondary flame retardant additive at a temperature of less than 150°C.

Thus, prior to step (3), the blended melt should be further cooled to below 150°C, This may be done, for example, by using a further heat exchanger/mixer, such as described in DE 28 39 564.

The secondary flame retardant additive is preferably a synergist flame retardant, selected from one or more peroxides having a 1h half life temperature of more than 130°C. The secondary flame retardant additive is preferably used in an amount which can range from 0.05 to 2 parts, preferably from 0.1 to 1.5 parts, by weight, per 100 parts by weight of the styrene polymer (initial polystyrene). A particularly preferred secondary flame retardant comprises dicumylperoxide (DCP).

Such additives are preferably prepared in situ as a solution at relatively high concentration (50% or greater) in the selected blowing agent

Mixing of the secondary flame retardant/third mix with the blended melt is preferably achieved by a further in-line mixer.

One or more further mixers may be provided to ensure complete homogeneous mixing prior to step (4).

Step (3) usually performed at an elevated pressure of at least 2 MPa for example in the range 4 to 8 MPa.

In step (4), the blended melt (including blowing agent, primary and secondary flame retardant additives and any other additives) is granulated.

Preferably, this is achieved by granulating the blended melt into water, typically by passing the blended melt through a suitable nozzle or nozzles under water wherein the polystyrene solidifies and is at the same time cut to form the required granules. The granules are usually separated by centrifuge and then dried.

## Claims

1. A process for the production of an expandable polystyrene, which expandable polystyrene comprises at least a primary flame retardant additive and a secondary flame retardant additive, said process comprising:
(1) mixing a formed polystyrene (a) with a first masterbatch of one or more additives other than flame retardant additives and (b) with a blowing agent, at a temperature of at least 175°C to form a blended melt,
(2) mixing said blended melt with the primary flame retardant additive at temperature of less than 175°C,
(3) subsequently mixing said melt with the secondary flame retardant additive at a temperature of less than 150°C, and
(4) granulating the final blended polystyrene.

2. A process as claimed in claim 1 wherein carbon black is added to the polystyrene as a component of the first masterbatch.

3. A process as claimed in claim 2 wherein the 0.05 to 1.0 part by weight of a carbon black having a BET specific surface area ranging from 550 to 1600 m²/g is introduced.

4. A process as claimed in any one of the preceding claims wherein the blowing agent is selected from C₃ to C₇ aliphatic hydrocarbons.

5. A process as claimed in any one of the preceding claims wherein the primary flame retardant additive is selected from one or more halogenated hydrocarbons, more preferably brominated hydrocarbons.

6. A process as claimed in any one of the preceding claims wherein the secondary flame retardant additive is a synergist flame retardant selected from one or more peroxides having a 1h half life temperature of more than 130°C.
